(19) Europäisches Patentamt
European Patent Office
Office européen des brevets

(11) **EP 3 913 951 B1**

(12) **FASCICULE DE BREVET EUROPEEN**

(45) Date de publication et mention de la délivrance du brevet:
**07.06.2023 Bulletin 2023/23**

(21) Numéro de dépôt: **21168052.5**

(22) Date de dépôt: **13.04.2021**

(51) Classification Internationale des Brevets (IPC):
**H04W 12/047** (2021.01)   **H04L 9/32** (2006.01)
**H04L 9/08** (2006.01)   **H04L 9/40** (2022.01)

(52) Classification Coopérative des Brevets (CPC):
**H04W 12/047; H04L 9/0841; H04L 9/3215;**
**H04L 63/18**

(54) **PROCÉDÉ D'APPAIRAGE**

PAIRING-VERFAHREN

PAIRING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.05.2020 FR 2005192**

(43) Date de publication de la demande:
**24.11.2021 Bulletin 2021/47**

(73) Titulaire: **Electricité de France**
**75008 Paris (FR)**

(72) Inventeurs:
• **KHALFAOUI, Sameh**
**91300 MASSY (FR)**
• **VILLARD, Arthur**
**91120 PALAISEAU (FR)**
• **MA, Jingxuan**
**78000 VERSAILLES (FR)**
• **LENEUTRE, Jean**
**91120 Palaiseau (FR)**

(74) Mandataire: **Plasseraud IP**
**66, rue de la Chaussée d'Antin**
**75440 Paris Cedex 09 (FR)**

(56) Documents cités:
**US-B1- 7 424 615**

• **WEI XI ET AL: "Instant and Robust Authentication and Key Agreement among Mobile Devices", COMPUTER AND COMMUNICATIONS SECURITY, ACM, 2 PENN PLAZA, SUITE 701 NEW YORK NY 10121-0701 USA, 24 octobre 2016 (2016-10-24), pages 616-627, XP058298954, DOI: 10.1145/2976749.2978298 ISBN: 978-1-4503-4139-4**
• **MIKHAIL FOMICHEV ET AL: "Survey and Systematization of Secure Device Pairing", ARXIV.ORG, CORNELL UNIVERSITY LIBRARY, 201 OLIN LIBRARY CORNELL UNIVERSITY ITHACA, NY 14853, 8 septembre 2017 (2017-09-08), XP080819557, DOI: 10.1109/COMST.2017.2748278**
• **SUHAS MATHUR ET AL: "ProxiMate", MOBISYS '11, ACM, US, 28 juin 2011 (2011-06-28), pages 211-224, XP058004573, DOI: 10.1145/1999995.2000016 ISBN: 978-1-4503-0643-0**
• **AHREN STUDER ET AL: "Don't Bump, Shake on It", PROCEEDINGS OF THE 27TH ANNUAL COMPUTER SECURITY APPLICATIONS CONFERENCE, 1 janvier 2011 (2011-01-01), page 333, XP055290349, DOI: 10.1145/2076732.2076780 ISBN: 978-1-4503-0672-0**

EP 3 913 951 B1

## Description

### Domaine technique

La présente invention concerne un procédé d'appairage sécurisé entre objets connectés.

### Technique antérieure

Selon l'état de la technique, afin de sécuriser la communication entre deux objets connectés de manière à offrir une certaine confidentialité, intégrité et authenticité, une étape d'appairage (device pairing) est proposée. L'appairage peut permettre d'établir une relation de confiance initiale entre deux objets connectés, par exemple en distribuant une nouvelle clef cryptographique symétrique entre un objet joignant le réseau et un objet de confiance, l'objet de confiance étant par exemple un smartphone ou terminal portable déjà authentifié et déjà appartenant au dit réseau. Les mécanismes d'appairage peuvent satisfaire un ensemble d'aspects de différentes natures, par exemple techniques ou budgétaires, pouvant varier selon le contexte dans lequel les objets connectés sont déployés. Nous citons ci-dessous certains de ces aspects.

Ces procédés d'appairage, également appelés protocoles d'appairage, peuvent dans certains cas être opérationnels avec des objets de natures diverses. En particulier, ces procédés d'appairage peuvent être peu consommateurs en termes de calcul. Ces procédés d'appairage ne doivent dans certains cas pas faire l'hypothèse systématique d'une relation de confiance préétablie entre les deux objets à appairer, une telle relation de confiance préétablie comprenant par exemple l'existence de clefs cryptographiques symétriques pré-partagées, ou de clefs publiques asymétriques authentifiées entre les deux objets. Ne pas faire l'hypothèse d'une relation de confiance préétablie peut servir à contourner des limitations de mécanismes de gestion de clefs traditionnels (symétriques et asymétriques) et à éviter des risques liés au fait de faire confiance à un tiers fabricant.

Les utilisateurs de réseaux Internet des Objets (IdO ou IoT, Internet of Things) n'étant pas a priori des experts en sécurité, les procédés d'appairage doivent dans certains cas requérir un minimum d'intervention de la part de ces utilisateurs pour configurer les mécanismes de sécurité, et doivent dans de tels cas être suffisamment intuitifs pour éviter qu'un utilisateur n'introduise une vulnérabilité de manière non intentionnelle. De telles considérations ont pour but d'éviter ou de réduire l'occurrence d'erreurs liées au facteur humain et de pouvoir passer à l'échelle dans le cas de réseaux IdO avec un grand nombre de dispositifs. Ces procédés d'appairage doivent préférablement être peu consommateurs en termes de communication (par exemple en réduisant un nombre de messages échangés entre les deux objets) et ne doivent préférablement pas nécessiter l'installation d'un matériel additionnel qui pourrait accroître le coût financier de manière non négligeable.

Afin d'offrir une certaine confidentialité, intégrité et authenticité sur la communication entre deux objets connectés tout en prenant en compte de tels aspects, les deux objets connectés à appairer devraient posséder la même clef symétrique à la fin de l'exécution du protocole d'appairage. Cette clef doit être préférablement éphémère et connue seulement par les objets légitimes. Dans l'art antérieur, il existe deux types de protocoles d'appairage ad-hoc (c'est-à-dire qui n'utilisent pas des informations pré-partagées).

Un premier type de procédé d'appairage n'utilisant pas d'informations pré-partagées est le protocole d'appairage hors bande, qui utilise un canal auxiliaire, appelé aussi canal hors bande ou OoB pour « Out-of-Band channel », ceci afin d'authentifier des clefs échangées sur un canal principal, aussi appelé « In-Band channel », le canal principal étant dans certains cas considéré comme non sécurisé.

Ces procédés d'appairage hors bande utilisent généralement le mécanisme d'échange de clefs de Diffie-Hellman entre les deux objets sur un canal principal. Afin d'éviter par exemple une tentative d'attaque de type homme-au-milieu, une étape d'authentification des clefs échangées sur le canal principal, qui peut être sous le contrôle d'un attaquant, est effectuée. Cette étape d'authentification se fait sur un canal auxiliaire ou hors bande sur lequel un attaquant possède des capacités limitées (un attaquant est dans cet exemple uniquement capable d'écouter, de retarder et de bloquer le trafic de données). Dans l'art antérieur, il existe plusieurs protocoles d'appairage qui exploitent différents types de canaux hors bande, tels que des canaux audio, visuels ou haptiques. Un exemple de canal visuel utilise des impulsions lumineuses pour transmettre des bits d'authentification. Les protocoles d'appairage utilisent ces canaux pour envoyer des informations (telles qu'une fonction de hachage, également appelée hash, ou un nonce) qui authentifient les clefs échangées sur le canal principal.

Un second type de procédé d'appairage n'utilisant pas d'informations pré-partagées est le protocole contextuel, qui utilise l'environnement ambiant (environnement audio, radio ou magnétique par exemple) pour extraire une information contextuelle connue par des objets co-localisés, ceci afin de pallier par exemple l'absence d'informations pré-partagées. Cette information contextuelle est utilisée pour sécuriser la communication entre les deux appareils.

Ces procédés d'appairage contextuels sans pré-distribution de clefs (parfois appelés context based pairing protocols) se basent sur la coprésence des objets : des objets ou dispositifs présents dans une même région géographique vont percevoir le même contexte ambiant, ou un contexte ambiant similaire, à l'aide de capteurs embarqués. Chaque objet peut mesurer un instantané de son contexte ambiant suivant un capteur dédié (permettant par exemple des mesures acoustiques ou électromagnétiques). Cet instantané permet de calculer une empreinte du contexte (context fingerprint) qui peut être utilisée pour authentifier un échange de clefs. Cet instantané permet également de générer une clef à partir des informations similaires collectées par les deux objets. Cet instantané permet enfin d'encoder des bits en utilisant ces mesures.

Ces mécanismes des procédés d'appairage contextuels supposent qu'un attaquant est en dehors d'une zone de sécurité bien définie pour que seuls les objets ou appareils légitimes aient la capacité d'avoir accès à ces informations contextuelles. La taille de la zone de confiance peut être liée au choix d'une variable contextuelle. La zone peut varier de quelques centimètres jusqu'à des dizaines de mètres.

WEI XI ET AL décrivent un "Instant and Robust Authentication and Key Agreement among Mobile Devices" dans COMPUTER AND COMMUNICATIONS SECURITY, ACM, daté du 24 octobre 2016, pages 616-627. MIKHAIL FOMICHEV ET AL décrivent "Survey and Systematization of Secure Device Pairing" dans ARXIV.ORG, CORNELL UNIVERSITY LIBRARY, 201 OLIN LIBRARY CORNELL UNIVERSITY, daté du 8 septembre 2017. US7424615 décrit un "Mutually authenticated secure key exchange (MASKE)".

**Résumé**

La présente invention est définie par les revendications indépendantes ci-jointes. D'autres caractéristiques et avantages découlant des concepts divulgués ici sont exposés dans la description qui suit. Ils se dégagent en partie de la description ou pourront être acquis par la pratique des technologies décrites. Les caractéristiques et avantages de ces concepts peuvent être réalisés et obtenus au moyen des instruments et combinaisons signalés en particulier dans les revendications ci-jointes. Ces caractéristiques et d'autres caractéristiques des technologies décrites transparaîtront plus largement au travers de la description suivante et des revendications ci-jointes, ou pourront être déduites de la pratique des concepts exposés ici.

Le présent exposé décrit un procédé selon la revendication 1 destiné à l'appairage entre un premier objet et un second objet, le premier et le second objet étant des objets connectés partageant un même contexte, le procédé comprenant :

a. la transmission, par le premier objet, sur un canal de communication principal, d'un identifiant du premier objet, d'une clef publique altérée du premier objet, d'une première fonction de hachage et d'un terme de synchronisation contextuel, la clef publique altérée du premier objet étant générée à partir d'un nonce éphémère du premier objet et d'une clef privée éphémère du premier objet, la première fonction de hachage étant une fonction d'une clef publique du premier objet et du nonce éphémère du premier objet, la clef publique du premier objet étant générée à partir de la clef privée éphémère du premier objet ;

b. la réception, par le premier objet, sur le canal de communication principal, d'un identifiant du second objet, d'une clef publique altérée du second objet et d'un code contextuel, la clef publique altérée du second objet étant générée à partir d'une clef privée éphémère du second objet et d'un nonce éphémère du second objet, le code contextuel étant encodé à partir d'un protocole contextuel et étant une fonction du nonce éphémère du second objet et de la clef publique altérée du premier objet ;

c. la transmission, par le premier objet, sur un canal hors bande, d'une chaine courte d'authentification, la chaine courte d'authentification étant fonction du nonce éphémère du premier objet, du nonce éphémère du second objet, et d'une troncature d'une clef publique du second objet; et

d. la réception, par le premier objet, sur le canal de communication principal, d'une fonction de hachage avec clef, la fonction de hachage avec clef étant une fonction de l'identifiant du premier objet, de l'identifiant du second objet, de la clef publique du premier objet et de la clef publique du second objet.

Un tel procédé, du point de vue du premier objet, permet l'utilisation non seulement d'un canal hors bande et d'un canal principal lors de l'appairage, mais également l'utilisation d'un même contexte pour les deux objets concernés. Cette utilisation du contexte et du canal hors bande s'intrique par le biais de la communication d'un code contextuel étant encodé à partir d'un protocole contextuel et étant une fonction du nonce éphémère du second objet et permettant donc au premier objet d'en déduire la valeur du nonce éphémère du second objet, ceci permettant la transmission sur canal hors bande de la chaine courte d'authentification qui est une fonction, entre autres, de ce même nonce éphémère du second objet. L'utilisation du canal hors bande est donc dans ce procédé dépendante de la réception d'informations contextuelles.

Le présent exposé décrit également un procédé selon la revendication 2 destiné à l'appairage entre un premier objet et un second objet, le premier et le second objet étant des objets connectés partageant un même contexte, le procédé comprenant :

a. la réception, par le second objet, sur un canal de communication principal, d'une clef publique altérée du premier objet, d'une première fonction de hachage et d'un terme de synchronisation contextuel, la clef publique altérée du premier objet étant générée à partir d'un nonce éphémère du premier objet et d'une clef privée éphémère du premier objet, la première fonction de hachage étant une fonction d'une clef publique du premier objet et du nonce éphémère du premier objet, la clef publique du premier objet étant générée à partir de la clef privée éphémère du premier objet;

b. la transmission, par le second objet, sur le canal de communication principal, d'un identifiant du second objet, d'une clef publique altérée du second objet et d'un code contextuel, la clef publique altérée du second objet étant générée à partir d'une clef privée éphémère du second objet et d'un nonce éphémère du second objet, le code contextuel étant encodé à partir d'un protocole contextuel et étant une fonction du nonce éphémère du second objet et de la clef publique altérée du premier objet ;

c. la réception, par le second objet, sur un canal hors bande, d'une chaîne courte d'authentification, la chaîne courte d'authentification étant fonction du nonce éphémère du premier objet, du nonce éphémère du second objet, et d'une troncature d'une clef publique du second objet; et

d. la transmission, par le second objet, sur le canal de communication principal, d'une fonction de hachage avec clef.

Un tel procédé, du point de vue du second objet, permet de la même manière de combiner de manière efficace et en peu d'échanges l'utilisation d'informations contextuelles et d'un canal hors bande. Il est important de noter que cette utilisation ne consiste pas uniquement à juxtaposer l'utilisation, dans un premier aspect, du contexte et, dans un second aspect, d'un canal hors bande, mais à intriquer l'utilisation des deux aspects en encodant le nonce éphémère du second objet par le biais d'un protocole contextuel, ce même nonce éphémère du second objet ne pouvant être décodé sans connaissance du contexte, la connaissance de ce même nonce éphémère du second objet par le premier objet bénéficiant du même contexte permettant la transmission sur canal hors bande de la chaîne courte d'authentification fonction de ce même nonce éphémère du second objet.

Dans certains cas, le procédé comprend la confirmation de l'appairage par un utilisateur, la confirmation se produisant en effectuant une action sur l'un du premier ou second objet. Une telle confirmation peut avoir lieu par le biais de l'utilisateur du premier objet, ou par l'utilisateur du second objet.

Cette action permet à l'utilisateur de l'objet respectif de valider l'établissement de l'appairage, tout en limitant l'intervention de ce même utilisateur à cette action dans le cadre du procédé d'appairage.

Dans certains cas, le canal de communication principal est un canal par ondes radio.

L'utilisation d'ondes radio en tant que canal principal permet d'appliquer le procédé d'appairage à un grand nombre d'objets connectés comprenant un émetteur et un récepteur radio, et permet également de bénéficier de bandes passantes significatives permettant aux objets de communiquer de manière efficace et rapide. La plupart des communications comprises dans les procédés tels que décrits s'effectuent en effet par le biais de ce canal principal, à l'exception de la chaîne courte d'authentification.

Dans certains cas, le canal hors bande est un canal de communication par lumière visible, un canal de communication haptique, un canal de communication acoustique ou un canal de communication radio.

Dû au fait que le canal hors bande est, dans le procédé tel que décrit, uniquement utilisé pour la transmission de la chaîne courte d'authentification, l'utilisation de ce canal hors bande est limitée à la communication d'une quantité d'information particulièrement réduite. Ceci permet d'utiliser une grande variété de technologies différentes pour ce canal hors bande, même si ces technologies peuvent limiter l'efficacité et la rapidité de communication.

Dans certains cas, la chaine courte d'authentification est un OR exclusif du nonce éphémère du premier objet, du nonce éphémère du second objet, et de la troncature de la clef publique du second objet.

L'utilisation d'un tel OR exclusif permet tout à la fois de limiter la quantité d'information à transmettre par le biais du canal hors bande et d'assurer la vérification par le second objet du fait que le premier objet a été à même de décoder la valeur du nonce éphémère du second objet, de par le fait que le premier et le second objet partagent un même contexte.

Dans certains cas, le terme de synchronisation contextuel correspond à une séquence de mesures contextuelles du premier objet.

L'utilisation d'une séquence de mesures contextuelles par le premier objet et sa transmission au second objet par le biais du terme de synchronisation contextuel permet au second objet de se synchroniser précisément avec le premier objet dans le cadre du protocole contextuel utilisé pour la transmission du nonce éphémère du second objet par le biais du code contextuel.

Dans certains cas, le contexte est un contexte radio.

L'utilisation d'un contexte radio permet d'utiliser le procédé tel que décrit avec un grand nombre d'objets connectés comprenant un récepteur radio.

Dans certains cas, le contexte est un contexte acoustique.

L'utilisation d'un contexte acoustique permet d'utiliser le procédé tel que décrit avec un grand nombre d'objets connectés comprenant un microphone.

Dans certains cas, le contexte est un contexte magnétique.

L'utilisation d'un contexte magnétique permet de limiter l'utilisation du procédé tel que décrit à des objets disposant d'un capteur de champ magnétique.

Dans certains cas, le premier et le second objet se trouvent à moins de 10 mètres l'un de l'autre.

Une telle proximité géographique permet dans de tels cas de s'assurer du fait que le premier et le second objet partagent un même contexte.

Dans certains cas, les identifiants du premier et du second objet correspondent à leurs adresses de contrôle d'accès au support, MAC, respectives, à un identifiant numérique unique, ou à un identifiant de type Bluetooth.

La possibilité d'utiliser différents identifiants permet de rendre possible l'intégration du procédé tel que décrit à une grande variété de protocoles de communication.

Le présent exposé décrit également un support d'enregistrement lisible par microprocesseur comprenant des instructions qui, lorsqu'elles sont exécutées par un microprocesseur, conduisent celui-ci à mettre en oeuvre le procédé selon cet exposé.

Un tel support permet de communiquer de telles instructions à différents objets comprenant un microprocesseur.

Le présent exposé décrit également un appareil comprenant un contrôleur de l'appareil configuré pour mettre en oeuvre un procédé selon cet exposé.

Un tel appareil peut par exemple correspondre au premier objet ou au second objet selon cet exposé.

Dans certains cas, l'appareil comprend un émetteur et un récepteur d'ondes radio, un capteur de lumière visible, une diode électroluminescente et une interface graphique à boutons.

Un tel appareil permet par exemple d'utiliser un canal radio comme canal principal, un canal par lumière visible comme canal hors bande, et permet la confirmation de l'appairage par un utilisateur par le biais d'un bouton de l'interface graphique.

Dans certains cas, l'appareil comprend un microphone et un haut-parleur.

Un tel appareil permet par exemple d'utiliser un canal acoustique en tant que canal hors bande.

## Brève description des dessins

D'autres caractéristiques, détails et avantages apparaîtront à la lecture de la description détaillée ci-après, et à l'analyse des dessins annexés, sur lesquels :

**Fig. 1A**

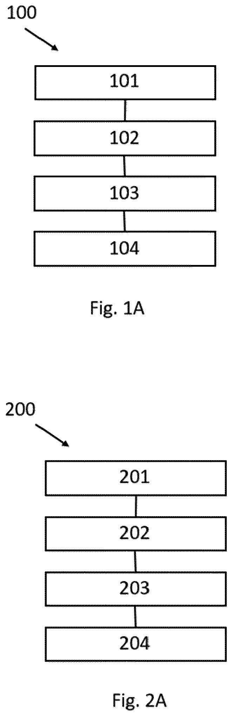

[Fig. 1A] est une représentation d'exemple de procédé selon le présent exposé.
**Fig. 1B**

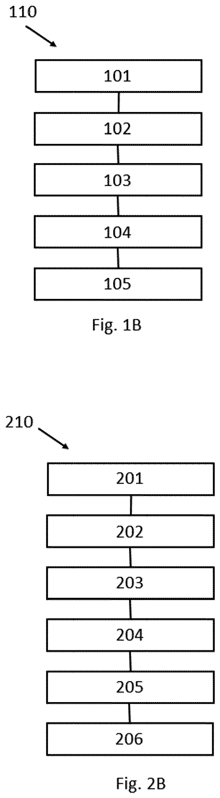

[Fig. 1B] est une représentation d'exemple de procédé selon le présent exposé.
**Fig. 1C**

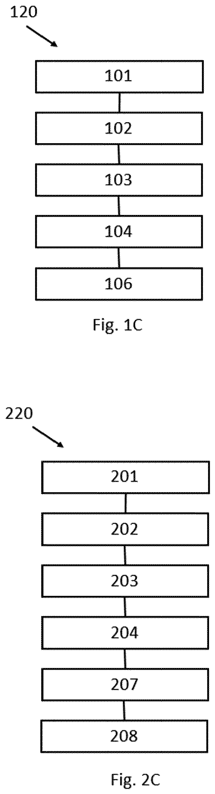

[Fig. 1C] est une représentation d'exemple de procédé selon le présent exposé.
**Fig. 2A**
[Fig. 2A] est une représentation d'exemple de procédé selon le présent exposé.
**Fig. 2B**
[Fig. 2B] est une représentation d'exemple de procédé selon le présent exposé.
**Fig. 2C**
[Fig. 2C] est une représentation d'exemple de procédé selon le présent exposé.
**Fig. 3**

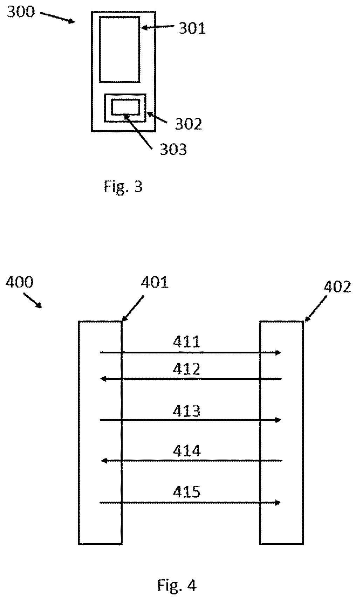

[Fig. 3] est une représentation d'exemple d'appareil selon le présent exposé.
**Fig. 4**
[Fig. 4] est une représentation d'un exemple de procédé selon le présent exposé.
**Fig. 5**

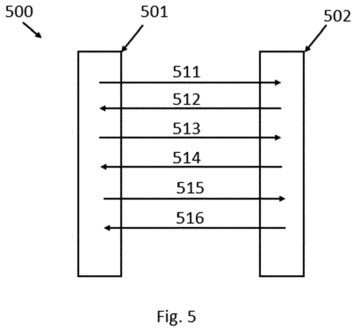

[Fig. 5] est une représentation d'un exemple de procédé selon le présent exposé.

## Description des modes de réalisation

Cet exposé concerne un procédé destiné à l'appairage entre un premier objet et un second objet, le premier et le second objet étant des objets connectés. Un procédé d'appairage peut être compris comme un protocole spécifique conduisant à un échange de clefs entre le premier et le second objet connectés afin de permettre une communication sécurisée entre ces deux objets connectés. Un tel protocole d'appairage peut avoir lieu de manière préliminaire à l'ouverture d'une session de communication sécurisée entre ces deux objets connectés. Une telle communication sécurisée entre objets prend particulièrement de l'importance dans un contexte de multiplication des objets connectés et des communications prenant place entre de tels objets, en particulier en considérant l'importance croissante des réseaux Internet des Objets. La communication établie entre le premier et le second objet suite à l'appairage tel que décrit dans cet exposé peut suivre différents protocoles tels que, par exemple, comprend l'un des éléments suivants : communication cellulaire de première génération (1G), communication cellulaire de deuxième génération (2G), communication cellulaire de troisième génération (3G), communication cellulaire de quatrième génération (4G), communication cellulaire de cinquième génération (5G), accès par paquets à haut débit (HSPA), l'accès par paquets sur liaison descendante à haut débit (HSDPA), l'accès par paquets sur liaison montante à haut débit (HSUPA), un service de messages courts (SMS), un service de messages multimédia (MMS), la communication par l'Internet des objets (IoT), l'interopérabilité mondiale pour l'accès aux micro-ondes (WiMax), l'Institute of Electrical and Electronics Engineers (IEEE) 802. 11x communication, communication Wi-Fi, radiodiffusion vidéo numérique - communication par satellite (DVB-S), radiodiffusion vidéo numérique - communication par satellite - deuxième génération (DVB-S2), extensions DVB-S2 (DVB-S2X) communication, radiodiffusion vidéo numérique - voie de retour par satellite (DVB-RCS) communication, système interactif par satellite de deuxième génération (DVB-RCS2) communication, ou communication de type Bluetooth.

Le premier et le second objet sont des objets ou appareils connectés. Des objets connectés selon cet exposé sont des objets en mesure de communiquer par échange de données digitales ou analogue. Un tel objet ou appareil peut être dédié à la communication, tel qu'un terminal portable de type smartphone, téléphone cellulaire, téléphone mobile ou tablette connectée, ou un appareil tel qu'un ordinateur de bureau, une télévision, un serveur mis en réseau ou un objet appartenant à un réseau de communication tel qu'un commutateur de réseau ou un routeur de réseau. Un tel objet peut également être connecté tout en ayant une ou plusieurs fonctions non directement liées à la communication, tels qu'un véhicule (automobile, avion, drone, bateau, train, métro, tramway, bicyclette, motocyclette, trottinette, scooter, autobus, autocar, tracteur, machine agricole, camion ou remorque par exemple), un appareil électroménager (réfrigérateur, machine à laver le linge, machine à laver la vaisselle, four, grille-pain, robot à cuisiner, moulin à café, lave-vaisselle, congélateur, chargeur électrique, lampe, lustre, volet électrique, porte blindée, serrure, valve de radiateur, portail, porte de garage, appareil radio ou réveil matin par exemple) ou une machine industrielle (système d'alarme, four industriel, robot d'usine, convoyeur, capteur, appareils de mesure, appareils médicaux, silo, compteurs électriques, compteurs à eau, transformateurs ou balances industrielles par exemple). Certains de ces objets ont une fonction principale qui n'est pas liée à la communication, et ont des capacités de communications limitées, ce qui rend particulièrement adaptés des procédés tels que décrits qui permettent de sécuriser de telles communications par appairage tout en limitant la densité de données échangées. La sécurité dans l'échange de données est particulièrement recherchée dans un contexte où la communication de données se multiplie exponentiellement dû précisément au nombre croissant d'objets dont le fonctionnement inclut une fonction de communication. Le premier et le second objet selon cet exposé sont connectés et aptes à se connecter en particulier l'un à l'autre de manière directe. Dans certains cas la communication a lieu à la frontière entre un espace privé et un espace public, par exemple dans le cas de relevé de compteurs électriques à distance, rendant des procédés tels que décrit de particulière utilité.

Cet exposé concerne des objets connectés partageant un même contexte. Le contexte selon cet exposé devrait être compris comme l'environnement d'un objet connecté. En particulier, si l'objet connecté dispose d'un senseur permettant d'évaluer une caractéristique environnementale telle que, par exemple, une grandeur électromagnétique, une luminosité ou un son, l'environnement correspond à une zone géographique correspondant à la portée du senseur correspondant à cette grandeur. La taille de la zone géographique correspondant au contexte peut dépendre de l'objet considéré et de la grandeur considérée. Un certain objet peut disposer d'un microphone particulièrement sensible permettant d'identifier des sons à une distance particulièrement grande par rapport à un autre objet, auquel cas un contexte acoustique ne couvrira pas une même zone pour ces deux objets.

Le contexte peut être dans certains exemples un contexte radio, la grandeur contextuelle correspondant par exemple à une amplitude ou à une fréquence d'une ou de plusieurs ondes électromagnétiques et éventuellement à leur évolution au cours du temps. Dans certains cas, des objets ou appareils situés à moins d'une demi-longueur d'onde l'un de l'autre percevront des fluctuations de signal électromagnétique similaires, alors qu'un objet situé à plus d'une demi-longueur d'onde d'un autre pourrait percevoir différents effets d'évanouissement à petite échelle. Par exemple, les longueurs d'onde d'une radio FM de 90 MHz, d'une télévision de 624 MHz et des transmissions de réseau sans fil WLAN à 2,4 GHz sont de 3,3m, 47cm et 12,5cm respectivement. Dans certains cas d'utilisation de contexte radio le premier et le second objet sont séparés par moins de 3m. Dans certains cas d'utilisation de contexte radio le premier et le second objet sont séparés par moins de 2m. Dans certains cas d'utilisation de contexte radio le premier et le second objet sont séparés par moins de 1m. Dans certains cas d'utilisation de contexte radio le premier et le second objet sont séparés par moins de 50cm. Dans certains cas d'utilisation de contexte radio le premier et le second objet sont séparés par moins de 25cm. Dans certains cas d'utilisation de contexte radio le premier et le second objet sont séparés par moins de 15cm. Dans certains cas d'utilisation de contexte radio le premier et le second objet sont séparés par moins de 10cm. Dans certains cas d'utilisation de contexte radio le premier et le second objet sont séparés par moins de 6cm.

Le contexte peut être dans certains exemples un contexte acoustique. Dans certains cas le contexte acoustique peut couvrir des fréquences comprises entre 20Hz et 20kHz. Dans certains cas le contexte acoustique peut couvrir des fréquences ultrason comprises entre 20kHz et 20MHz. Dans certains cas d'utilisation de contexte acoustique le premier et le second objet sont séparés par moins de 20m. Dans certains cas d'utilisation de contexte acoustique le premier et le second objet sont séparés par moins de 10m. Dans certains cas d'utilisation de contexte acoustique le premier et le second objet sont séparés par moins de 5m. Dans certains cas d'utilisation de contexte acoustique le premier et le second objet sont séparés par moins de 2m.

Le contexte peut être dans certains exemples un contexte magnétique. Le contexte magnétique peut être identifié en utilisant un magnétomètre intégré à un objet. Dans certains cas d'utilisation de contexte magnétique le premier et le second objet sont séparés par moins de 10cm. Dans certains cas d'utilisation de contexte magnétique le premier et le second objet sont séparés par moins de 5cm. Dans certains cas d'utilisation de contexte magnétique le premier et le second objet sont séparés par moins de 2cm.

D'autres exemples de contextes peuvent inclure un contexte visuel ou un contexte haptique, de tels contextes correspondant respectivement à des grandeurs captées par un capteur optique (une caméra par exemple) ou par un capteur de vibration (un accéléromètre par exemple).

Le contexte peut également comprendre différents contextes de différentes natures, tels qu'une combinaison de contexte radio et de contexte acoustique par exemple, et peut également comprendre une adaptation du contexte en fonction de la proximité des objets, par exemple en donnant un poids accru à un contexte magnétique à relativement courte distance, ou en donnant un poids accru à un contexte acoustique à relativement longue distance.

Dans certains cas, le premier et le second objet se trouvent à moins de 10 mètres l'un de l'autre. Dans certains cas, le premier et le second objet se trouvent à moins de 5 mètres l'un de l'autre. Dans certains cas, le premier et le second objet se trouvent à moins de 2 mètres l'un de l'autre. Dans certains cas, le premier et le second objet se trouvent à moins de 1 mètres l'un de l'autre. Dans certains cas, le premier et le second objet se trouvent à moins de 0.5 mètres l'un de l'autre. Dans certains cas, le premier et le second objet se trouvent à moins de 0.1 mètres l'un de l'autre. Dans certains cas, le premier et le second objet se trouvent à moins de 0.02 mètres l'un de l'autre.

La Figure 1A représente un exemple de procédé 100 destiné à l'appairage entre un premier objet et un second objet, le premier et le second objet étant des objets connectés partageant un même contexte, le procédé étant dans ce cas du point de vue du premier objet.

La Figure 2A représente un exemple de procédé 200 destiné à l'appairage entre un premier objet et un second objet, le premier et le second objet étant des objets connectés partageant un même contexte, le procédé étant dans ce cas du point de vue du second objet.

Les différents blocs illustrés dans les Figures 1A et 2A sont expliqués ensembles. Les différents blocs illustrés dans les Figures 1B et 2B d'une part, et 1C et 2C d'autre part seront également expliqués ensembles.

Le procédé 100 comprend dans le bloc 101 la transmission, par le premier objet, sur un canal de communication principal, d'un identifiant du premier objet, d'une clef publique altérée du premier objet, d'une première fonction de hachage et d'un terme de synchronisation contextuel, la clef publique altérée du premier objet étant générée à partir d'un nonce éphémère du premier objet et d'une clef privée éphémère du premier objet, la première fonction de hachage étant une fonction d'une clef publique du premier objet et du nonce éphémère du premier objet, la clef publique du premier objet étant générée à partir de la clef privée éphémère du premier objet.

La transmission selon le bloc 101 a lieu sur un canal de communication principal. Un canal de transmission principal (également appelé « in-Band channel ») selon cet exposé correspond à un canal de communication configuré pour la transmission d'un débit relativement élevé comparé au canal hors bande. Le canal principal est dans de nombreux cas le canal utilisé en aval (à la suite de la réalisation) du procédé d'appairage selon cet exposé pour la communication sécurisée entre le premier et le second objet. Le canal de communication principal est utilisé dans de nombreux exemples pour la majorité des communications ayant lieu entre le premier et le second objet. Le canal de communication principal a dans de nombreux cas une bande passante plus élevée qu'une bande passante du canal de communication hors bande selon cet exposé. La bande passante d'un canal est entendue ici comme la quantité maximale de données pouvant être transmise par le canal par seconde. Dans certains cas, une bande passante du canal de communication principal est plus de 10 fois plus élevée qu'une bande passante du canal hors bande. Dans certains cas, une bande passante du canal de communication principal est plus de 100 fois plus élevée qu'une bande passante du canal hors bande. Dans certains cas, une bande passante du canal de communication principal est plus de 1000 fois plus élevée qu'une bande passante du canal hors bande. Dans certains cas, une bande passante du canal de communication principal est plus de 10000 fois plus élevée qu'une bande passante du canal hors bande. Dans certains exemples, le canal de communication principal a une bande passante de plus de 10Mbit/s. Dans certains exemples, le canal de communication principal a une bande passante de plus de 20Mbit/s. Dans certains exemples, le canal de communication principal a une bande passante de plus de 100Mbit/s. Dans certains exemples, le canal de communication principal a une bande passante de plus de 1 Gbit/s. Dans certains exemple le canal hors bande a une bande passante de moins de 500Mbit/s. Dans certains exemple le canal hors bande a une bande passante de moins de 50Mbit/s. Dans certains exemple le canal hors bande a une bande passante de moins de 5Mbit/s. Dans certains exemple le canal hors bande a une bande passante de moins de 1 Mbit/s. Dans certains exemple le canal hors bande a une bande passante de moins de 100kbit/s. Dans certains exemple le canal hors bande a une bande passante de moins de 50kbit/s.

Dans certains exemples, le canal de communication principal est un canal par ondes radio. Un canal de communication principal par onde radio peut par exemple être de communication cellulaire de première génération (1G), communication cellulaire de deuxième génération (2G), communication cellulaire de troisième génération (3G), communication cellulaire de quatrième génération (4G), communication cellulaire de cinquième génération (5G), accès par paquets à haut débit (HSPA), l'accès par paquets sur liaison descendante à haut débit (HSDPA), l'accès par paquets sur liaison montante à haut débit (HSUPA), un service de messages courts (SMS), un service de messages multimédia (MMS), la communication par l'Internet des objets (IoT), l'interopérabilité mondiale pour l'accès aux micro-ondes (WiMax), l'Institute of Electrical and Electronics Engineers (IEEE) 802. 11x communication, communication Wi-Fi, radiodiffusion vidéo numérique - communication par satellite (DVB-S), radiodiffusion vidéo numérique - communication par satellite - deuxième génération (DVB-S2), extensions DVB-S2 (DVB-S2X) communication, radiodiffusion vidéo numérique - voie de retour par satellite (DVB-RCS) communication, système interactif par satellite de deuxième génération (DVB-RCS2) communication, ou communication de type Bluetooth

La transmission selon le bloc 101 comprend la transmission d'un identifiant du premier objet. Un identifiant selon cet exposé permet d'identifier de manière unique un objet spécifique dans le contexte considéré. Un objet peut avoir différents identifiants, par exemple correspondant à différents protocoles. Différents objets dans un même contexte ne peuvent avoir le même identifiant. Dans certains exemples, les identifiants du premier et du second objet correspondent à leurs adresses de contrôle d'accès au support, MAC, respectives, à un identifiant numérique unique, ou à un identifiant de type Bluetooth. Les identifiants peuvent par exemple être générés par un utilisateur ou par le fabricant, et peuvent prendre des formes très diverses (par exemple, les noms des appareils qui utilisent Bluetooth, ou un identifiant numérique unique). Cette transmission d'identifiant du premier objet selon le bloc 101 permet d'identifier l'origine de ladite transmission selon le bloc 101, dans ce cas-ci l'origine étant le premier objet.

La transmission selon le bloc 101 comprend la transmission d'une clef publique altérée du premier objet, la clef publique altérée du premier objet étant générée à partir d'un nonce éphémère du premier objet et d'une clef privée éphémère du premier objet. La clef privée éphémère est privée dans le sens où elle est uniquement connue du premier objet, et ne sera pas communiquée à un autre objet. La clef privée est éphémère dans le sens où elle sera renouvelée par le premier objet de manière périodique, par exemple pour chaque nouvelle session de communication. Une clef peut consister en une chaine de caractères, par exemple. Le nonce du premier objet est éphémère dans le sens où il sera renouvelé par le premier objet de manière périodique, par exemple pour chaque nouvelle session de communication. Le nonce du premier objet n'est pas privé, et sera communiqué au second objet au cours du procédé selon cet exposé. Un nonce peut par exemple consister en un nombre arbitraire et aléatoire ou pseudo-aléatoire. La génération de la clef publique est considérée comme altérée dû au fait qu'elle soit générée non seulement à partir de la clef privée du premier objet, mais aussi à partir d'un nonce éphémère du premier objet. Rendre la génération de la clef publique dépendante du nonce altère cette clef publique. La génération de la clef publique peut avoir lieu en utilisant un élément générateur qui peut avoir été découvert par le premier et par le second objet lors d'une étape de découverte précédent l'exécution du procédé selon cet exposé. Ce générateur ou élément générateur peut être un paramètre cryptographique fixé par un fabriquant de l'un des objets, ou par les objets eux-mêmes lors d'une phase de découverte préliminaire. L'altération de la clef publique peut par exemple consister à générer la clef publique à partir de la différence entre la clef privée et le nonce. Si le générateur est $g(x)$, la clef publique altérée peut être $g(a - r_a)$ où $a$ est la clef privée du premier objet et $r_a$ le nonce du premier objet. D'autres combinaisons peuvent être considérées pour l'altération, telles l'utilisation de la somme de la clef privée et du nonce $g(a + r_a)$. D'autres combinaisons peuvent être considérées.

La transmission selon le bloc 101 comprend la transmission d'une première fonction de hachage étant une fonction d'une clef publique du premier objet et du nonce éphémère du premier objet. Dans un exemple, cette première fonction de hachage est également fonction des identifiants du premier et du second objet. Cette première fonction de hachage permettra à un récepteur de cette transmission, tel que le second objet par exemple, de valider la réception des informations inclues dans la transmission selon ledit bloc 101. La clef publique du premier objet est générée à partir de la clef privée éphémère du premier objet, par exemple en utilisant le même générateur que le générateur utilisé pour générer la clef publique altérée du premier objet transmise dans la même transmission selon le bloc 101. La première fonction de hachage peut être une fonction de hachage simple, une fonction de hachage simple étant une fonction de hachage sans clef, ou bien la première fonction de hachage peut être une fonction de hachage avec clef, la clef étant par exemple générée par le premier objet afin d'éviter une tentative de récupération du nonce éphémère du premier objet à partir de cette première fonction de hachage.

La transmission selon le bloc 101 comprend la transmission d'un terme de synchronisation contextuelle. Un tel terme de synchronisation contextuelle sert à assurer la synchronisation du premier et du second objet quant à un protocole contextuel. Dans certains cas, cet élément sert à indiquer au second objet un début de partie valide d'informations contextuelles à utiliser en vue d'un encodage à partir d'un protocole contextuel. Dans certains cas, le terme de synchronisation contextuel correspond à une séquence de mesures contextuelles du premier objet, par exemple des mesures radio, audio ou magnétiques ayant été mesurées durant une période de temps déterminée par le premier objet, le second objet ayant effectué des mesures similaires au même instant dû au fait que le premier et le second objet partagent leur contexte. Ces mesures faites à un même instant ou durant une même période permettent une synchronisation d'horloge desdits objet en vue d'une synchronisation quant à un protocole contextuel.

Le procédé 200 comprend dans le bloc 201 la réflexion du point de vue du second objet du bloc 101. Le bloc 201 comprend en effet la réception, par le second objet, sur le canal de communication principal, de la clef publique altérée du premier objet, de la première fonction de hachage et du terme de synchronisation contextuel, la clef publique altérée du premier objet ayant été générée, par le premier objet en vue de la transmission selon le bloc 101, à partir du nonce éphémère du premier objet et de la clef privée éphémère du premier objet, la première fonction de hachage étant la fonction de la clef publique du premier objet et du nonce éphémère du premier objet, la clef publique du premier objet ayant été générée, par le premier objet, en vue de la transmission selon le bloc 101, à partir de la clef privée éphémère du premier objet. La réception selon le bloc 201 s'effectue en réponse à la transmission selon le block 101.

Le procédé 200 comprend dans le bloc 202 la transmission, par le second objet, sur le canal de communication principal, d'un identifiant du second objet, d'une clef publique altérée du second objet et d'un code contextuel, la clef publique altérée du second objet étant générée à partir d'une clef privée éphémère du second objet et d'un nonce éphémère du second objet, le code contextuel étant encodé à partir d'un protocole contextuel et étant une fonction du nonce éphémère du second objet et de la clef publique altérée du premier objet. Cette transmission selon le bloc 202 s'effectue suite à la réception selon le bloc 201.

La transmission selon le bloc 202 comprend la transmission d'un identifiant du second objet. Comme dans le cas de l'identifiant du premier objet, un identifiant selon cet exposé permet d'identifier de manière unique un objet spécifique dans le contexte considéré. Un objet peut avoir différents identifiants, par exemple correspondant différents protocoles. Différents objets dans un même contexte ne peuvent avoir le même identifiant. Dans certains exemples, les identifiants du premier et du second objet correspondent à leurs adresses de contrôle d'accès au support, MAC, respectives, à un identifiant numérique unique, ou à un identifiant de type Bluetooth. Les identifiants peuvent par exemple être générés par un utilisateur ou par le fabricant, et peuvent prendre des formes très diverses (par exemple, les noms des appareils qui utilisent Bluetooth, ou un identifiant numérique unique). Cette transmission d'identifiant du second objet selon le bloc 202 permet d'identifier l'origine de ladite transmission selon le bloc 202, dans ce cas-ci l'origine étant le second objet.

La transmission selon le bloc 202 comprend la transmission d'une clef publique altérée du second objet, la clef publique altérée du second objet étant générée à partir d'un nonce éphémère du second objet et d'une clef privée éphémère du second objet. La clef privée éphémère est privée dans le sens où elle est uniquement connue du second objet, et ne sera pas communiquée à un autre objet. La clef privée est éphémère dans le sens où elle sera renouvelée par le second objet de manière périodique, par exemple pour chaque nouvelle session de communication. Une clef peut consister en une chaine de caractères, par exemple. Le nonce du second objet est éphémère dans le sens où il sera renouvelé par le second objet de manière périodique, par exemple pour chaque nouvelle session de communication. Le nonce du second objet n'est pas privé, et sera communiqué au premier objet au cours du procédé selon cet exposé. Un nonce peut par exemple consister en un nombre arbitraire et aléatoire ou pseudo-aléatoire. La génération de la clef publique est considérée comme altérée dû au fait qu'elle soit générée non seulement à partir de la clef privée du second objet, mais aussi à partir d'un nonce éphémère du second objet. Rendre la génération de la clef publique dépendante du nonce altère cette clef publique. La génération de la clef publique peut avoir lieu en utilisant un même générateur de clef qui peut avoir été découvert par le premier et par le second objet lors d'une étape de découverte précédent l'exécution du procédé selon cet exposé. L'altération de la clef publique peut par exemple consister à générer la clef publique à partir de la différence entre la clef privée et le nonce. Si le générateur est $g(x)$, la clef publique altérée peut être $g(b - r_b)$ où $b$ est la clef privée du second objet et $r_b$ le nonce du second objet. D'autres combinaisons peuvent être considérées pour l'altération, telles l'utilisation de la somme de la clef privée et du nonce $g(b + r_b)$. D'autres combinaisons peuvent être considérées. Le générateur utilisé pour la génération de clef est dans ce cas le même générateur que celui utilisé par le premier objet pour générer la clef publique et la clef publique altérée du premier objet transmise selon le bloc 101.

La transmission selon le bloc 202 comprend la transmission d'un code contextuel étant encodé à partir d'un protocole contextuel et étant une fonction du nonce éphémère du second objet et de la clef publique altérée du premier objet. Le protocole contextuel peut être un protocole contextuel basé sur un certain contexte tels qu'un contexte radio, audio ou magnétique par exemple. Un tel protocole permet de prendre en compte le contexte d'un objet utilisant ce protocole. Dû au fait que le premier et le second objet partagent un même contexte, leur utilisation du protocole contextuel sera de la même nature. Le second objet encodant le code contextuel utilisant le protocole contextuel, le premier objet pourra décoder ce code contextuel dû au fait que le premier et le second objet partagent le même contexte.

Le procédé 100 comprend en effet dans le bloc 102 la réception, par le premier objet, sur le canal de communication principal, de l'identifiant du second objet, de la clef publique altérée du second objet et du code contextuel, la clef publique altérée du second objet ayant été générée, en vue de la transmission selon le bloc 202, par le second objet, à partir de la clef privée éphémère du second objet et du nonce éphémère du second objet, le code contextuel ayant été encodé, par le second objet, en vue de la transmission selon le bloc 202, à partir du protocole contextuel et étant une fonction du nonce éphémère du second objet et de la clef publique altérée du premier objet.

Cette réception selon le bloc 102 se fait sur le même canal principal (ou canal de communication principal) que la transmission selon le bloc 101, permettant par exemple l'utilisation d'un canal ayant une bande passante relativement élevée.

La réception selon le bloc 102 se fait suite à la transmission selon le bloc 202. Étant donné le fait que le premier et le second objet partagent le même contexte, et donc le même protocole contextuel, le premier objet est en mesure, suite à la réception du code contextuel selon le bloc 102, de déduire la valeur du nonce du second objet à partir du code contextuel encodé par le second objet utilisant le même protocole contextuel. La déduction par le premier objet de la valeur du nonce du second objet à partir du décodage du code contextuel transmis par le second objet permet au premier objet de déduire de la clef publique altérée du second objet la clef publique du second objet. La clef publique altérée du second objet a en effet été transmise au premier objet selon le bloc 202.

La réception selon le bloc 102 est suivie d'une transmission selon le bloc 103. La transmission selon le bloc 103 est la transmission, par le premier objet, sur un canal hors bande, d'une chaine courte d'authentification, la chaine courte d'authentification étant fonction du nonce éphémère du premier objet, du nonce éphémère du second objet, et d'une troncature d'une clef publique du second objet. Il est important de noter le fait que le premier objet a été en mesure de déduire la valeur du nonce éphémère du second objet du code contextuel, dû au fait que le premier et le second objet partagent le même contexte. De même la clef publique du second objet, et donc sa troncature, a été déduite par le premier objet de la clef publique altérée du second objet et de la valeur du nonce du second objet. Seul un premier objet partageant le contexte du second objet sera en mesure de transmettre une chaîne courte d'authentification correcte. Il est important de noter que cette chaîne courte d'identification est transmise sur un canal hors bande, permettant une sécurité de transmission accrue. Dans certains cas, la chaine courte d'authentification est un OR exclusif, ou XOR, du nonce éphémère du premier objet, du nonce éphémère du second objet, et d'une troncature de la clef publique du second objet. Une troncature est utilisée pour permettre de réduire la quantité de données transmises.

Un canal hors bande selon cet exposé est un canal qui diffère du canal de communication principal. Un canal hors bande peut utiliser pour la transmission de données une grandeur différente de la grandeur utilisée pour la transmission de données par le canal de communication principal. Un canal hors bande peut également utiliser pour la transmission de données la même grandeur que la grandeur utilisée pour la transmission de données par le canal de communication principal, cette grandeur étant utilisée avec des caractéristiques différentes. Dans certains cas, canal hors bande est un canal de communication par lumière visible, un canal de communication haptique, un canal de communication acoustique ou un canal de communication radio.

Dans certains exemples le canal hors bande est un canal de communication par lumière visible ou VLC. La VLC est une technologie de communication sans fil qui transporte des informations en modulant la lumière dans le spectre visible utilisé pour l'éclairage. La VLC fonctionne dans la bande de fréquences 400-800 THz et est largement considérée comme étant utilisée pour les communications intérieures à courte portée. Les débits de données pouvant être atteints par la norme existante (IEEE 802.15.7) varient de 11,67 kbit/s à 96 Mbit/s [126], bien que des recherches récentes aient démontré un débit allant jusqu'à 20 Gbit/s. En général, la VLC a une couverture allant jusqu'à 10 mètres. La transmission VLC nécessite une visibilité directe et ne peut pas pénétrer les objets solides non transparents tels que les murs et les portes. Par conséquent, la communication VLC est cachée, dans une certaine mesure, à un adversaire qui n'est pas co-présent.

Dans certains exemples le canal hors bande est un canal de communication haptique. Un canal haptique est formé par des ondes de basse fréquence dans une gamme de 40 à 800 Hz qui provoquent des sensations tactiles. Pour la transmission de données, un tel canal peut être représenté par une paire vibreur-accéléromètre, où le premier génère un ensemble d'impulsions captées par le second. Il a récemment été démontré qu'avec des schémas de modulation et de codage avancés, des débits de données allant jusqu'à 200 bits/s peuvent être obtenus sur le canal haptique. La communication haptique nécessite un contact physique direct entre l'émetteur et le récepteur. De par sa nature, la transmission haptique ne se propage pas bien dans l'air et ne peut pas traverser des objets solides, par exemple des murs. En outre, la communication haptique est perceptible par l'homme et ne nécessite pas de LOS (ligne directe de vision, line of sight).

Dans certains exemples le canal hors bande est un canal de communication acoustique. Un canal de communication acoustique peut comprendre une onde de pression mécanique causée par des vibrations périodiques dans une gamme de fréquences audibles de 20 Hz à 20 kHz. Dans ce cas, un canal audio serait représenté par une paire haut-parleur-microphone, où le premier génère un son et le second l'enregistre. Un autre exemple de canal de communication acoustique peut utiliser des ultrasons. Les ultrasons sont des ondes acoustiques qui se situent dans une gamme de fréquences supérieure au son audible. Dans ce spectre de fréquences ultrason, les fréquences supérieures à 250 kHz sont fortement absorbées par l'air et sont donc principalement utilisées pour l'imagerie médicale plutôt que pour la transmission de données. Comme dans le cas du son, le canal ultrasonore est formé par une paire de haut-parleur-microphone ultrasonore, qui se basent par exemple sur l'effet piézoélectrique pour produire des ondes de haute fréquence. Le débit et la portée de transmission du canal ultrasonore peuvent varier de 230 bits/s à 2 kbits/s à des distances correspondantes de 11 et 2 mètres. Contrairement à l'audio, la communication par ultrasons ne peut pas être détectée par l'homme. Lorsqu'il se propage dans l'air, le signal ultrasonore est soumis à des taux de réflexion et d'absorption élevés causée par des objets solides, par exemple des murs, ce qui limite la communication par ultrasons à une seule pièce. La transmission de données par ultrasons ne nécessite pas de LOS.

Dans certains exemples le canal hors bande est un canal de communication radio. Ceci peut couvrir de nombreuses possibilités.

Dans un exemple le canal de communication radio hors bande est un canal wifi ou Wi-Fi. Le Wi-Fi est une technologie de communication sans fil basée sur un ensemble de normes IEEE 802.11 et est utilisé pour connecter des appareils ou objets connectés au sein d'un réseau local sans fil. Les normes Wi-Fi les plus courantes, telles que 802.11 a/b/g/n/ac, fonctionnent dans les bandes de fréquences de 2,4 et 5 GHz. D'autres bandes de fréquences, par exemple autour de 60 GHz, sont également normalisées (IEEE 802.11ad) mais moins fréquemment utilisées. Différents modes de fonctionnement sont disponibles pour le Wi-Fi : en infrastructure, direct et ad hoc. Le mode infrastructure est établi avec un point d'accès centralisé (AP), qui gère tout le trafic du réseau à partir des stations connectées. Ces deux derniers modes sont formés de manière peer-to-peer (objet connecté à objet connecté) directement par les appareils. Les débits de données des communications Wi-Fi peuvent dépasser 1 Gbit/s. La couverture Wi-Fi varie de 30 à 250 mètres, pour les environnements intérieurs et extérieurs respectivement. La bande de 5 GHz a une portée de communication plus faible en raison d'une longueur d'onde plus courte et d'une atténuation plus importante que la bande de 2,4 GHz. La communication Wi-Fi est imperceptible par l'homme et permet une transmission omnidirectionnelle, les signaux se propageant à travers la plupart des objets non métalliques tels que les murs, les portes et les fenêtres.

Dans un autre exemple, le canal de communication radio hors bande est un canal Bluetooth. Bluetooth est une technologie de communication sans fil qui fonctionne dans la bande de fréquences de 2,4 GHz et qui est utilisée pour connecter plusieurs appareils (ou objets connectés) de manière ad hoc, formant ainsi un réseau personnel. Les débits de données typiques pour Bluetooth sont de 1 à 3 Mbit/s mais peuvent atteindre 24 Mbit/s. La couverture Bluetooth varie de 1 à 100 mètres selon les antennes utilisées et peut être utilisée à l'intérieur comme à l'extérieur. Les caractéristiques physiques de la communication Bluetooth sont similaires à celles du Wi-Fi à 2,4 GHz. Par conséquent, elle ne peut être détectée par l'homme, atteint une pénétration relativement élevée des objets solides et ne nécessite pas de LOS pour la transmission des données.

Dans un autre exemple, le canal de communication radio hors bande est un canal à ondes millimétriques. Les communications sans fil à ondes millimétriques fonctionnent dans une large bande de fréquences de 30 à 300 GHz. La partie inférieure du spectre des ondes millimétriques (30-50 GHz) est considérée comme utilisée dans les environnements cellulaires et intérieurs avec une couverture allant jusqu'à 200 mètres, bien que les liaisons extérieures point à point à grande vitesse puissent fonctionner sur de plus longues distances. Les ondes millimétriques permettent des débits de données très élevés grâce aux larges bandes de canaux disponibles. Par exemple, la norme IEEE 802.11 ad permet d'atteindre une vitesse de transmission allant jusqu'à 6,75 Gbit/s dans une zone de couverture allant jusqu'à 10 mètres. En raison des taux d'atténuation et d'absorption élevés, les ondes millimétriques à 60 GHz ne se propagent pas à travers les objets solides, par exemple les murs. Faisant partie du spectre des micro-ondes, les ondes millimétriques ne peuvent pas être perçues par l'homme.

Dans un autre exemple, le canal de communication radio hors bande est un canal à d'identification par radiofréquence (RFID). La RFID est une technologie de communication sans fil qui est utilisée pour l'identification automatique dans des environnements intérieurs et extérieurs. Un système RFID se compose d'étiquettes (actives ou passives) qui stockent les informations d'identification et de lecteurs qui interrogent les étiquettes afin d'extraire et de vérifier ces informations. Les étiquettes passives plus omniprésentes doivent récolter l'énergie des ondes radio interrogatoires du lecteur RFID situé à proximité, alors que les étiquettes actives ont une alimentation électrique embarquée, par exemple une batterie. La RFID fonctionne sur plusieurs bandes de fréquences : basse fréquence (120-150 kHz), haute fréquence (13,56 MHz), ultra-haute fréquence (860-960 MHz), micro-ondes (2,45 et 5,8 GHz), et bande ultra-large (3,1-10,6 GHz). Les débits de données varient et dépendent des spectres utilisés. La couverture signalée pour la technologie RFID va de 10 à 100 mètres pour les étiquettes passives et actives. Quelle que soit la fréquence sous-jacente, les communications RFID ne peuvent pas être détectées par l'homme. Cependant, la capacité de transmission de la RFID à passer à travers des objets solides dépend du spectre utilisé ainsi que de l'antenne employée et est plus élevée pour la RFID active. Pour envoyer et recevoir des données avec la RFID, il n'est pas nécessaire de disposer d'un LOS.

Dans un autre exemple, le canal de communication radio hors bande est un canal à communication en champ proche (NFC). La NFC est une technologie de communication sans fil qui est utilisé pour établir une communication point à point entre deux appareils placés à proximité l'un de l'autre. La NFC est une ramification de la technologie RFID, les dispositifs NFC peuvent donc être actifs ou passifs de la même manière. La NFC fonctionne dans la bande de fréquences de 13,56 MHz et supporte des débits de données allant jusqu'à 424 kbit/s. La couverture de la NFC est très limitée, allant jusqu'à 10 cm. Tout comme la RFID, la communication NFC ne peut pas être perçue par l'homme, peut pénétrer un objet solide dans une certaine mesure et ne nécessite pas de LOS pour la transmission des données.

Dans un autre exemple, le canal de communication hors bande est un canal de communication par infrarouge, tel que, par exemple, un canal selon l'Association des données infrarouges (IRDA). L'IRDA est un ensemble de technologies de communication sans fil qui utilise le spectre radioélectrique infrarouge de 334-353 THz pour la transmission de données point à point. Comme l'IRDA est sensible aux interférences des sources de lumière ambiante, elle est surtout utilisée pour des applications en intérieur. La communication IRDA permet des débits de données élevés allant jusqu'à 1 Gbit/s. L'IRDA a une couverture allant jusqu'à 1 mètre, est imperceptible par l'homme et nécessite un LOS direct.

De nombreux autre canaux de communications hors bandes peuvent être utilisés, de tels canaux souvent ayant une couverture limitée dans l'espace comparés à des canaux de communication principaux.

La transmission selon le bloc 103 est suivie par la réception selon le bloc 203, par le second objet, sur le canal hors bande, de la chaîne courte d'authentification, transmise par le premier objet, la chaîne courte d'authentification étant fonction du nonce éphémère du premier objet, du nonce éphémère du second objet, et d'une troncature d'une clef publique du second objet. Ceci permet au second objet de vérifier que le premier objet a bien décodé le nonce éphémère du second objet, et que le premier objet a donc bien accès au même contexte que celui auquel le second objet a accès.

La réception selon le bloc 203 est suivie par la transmission, selon le bloc 204, par le second objet, sur le canal de communication principal, d'une fonction de hachage avec clef. Dans un exemple la fonction de hachage avec clef est fonction des identifiants du premier et du second objet, ainsi que des clefs publiques du premier et du second objet, la clef de ladite fonction de hachage avec clef étant par exemple la clef secrète de Diffie-Hellman $K = g^a$, $g$ étant le générateur de clef, $a$ étant la clef privée éphémère du premier objet et $b$ la clef privée éphémère du second objet.

La transmission selon le bloc 204 est suivie par la réception, selon le bloc 104, par le premier objet, sur le canal de communication principal, de la fonction de hachage avec clef, transmise par le second objet selon le bloc 204, la fonction de hachage avec clef étant la fonction de l'identifiant du premier objet, de l'identifiant du second objet, de la clef publique du premier objet et de la clef publique du second objet. La réception de cette fonction de hachage avec clef complète la préparation de l'appairage, qui reste à confirmer.

Dans un autre exemple de procédé 110 illustré par la Figure 1B, qui comprend les blocs 101-104 de la Figure 1A, la réception, selon le bloc 104, de la fonction de hachage avec clef, est suivie, selon le bloc 105, par la transmission, par le premier objet, du résultat d'appairage en vue d'une confirmation par un utilisateur du second objet. Un résultat d'appairage peut comprendre une authentification des clefs publique échangées, par exemple par vérification des fonctions de hachage comme correctes. Un résultat d'appairage peut alternativement comprendre l'absence d'authentification, par exemple dû à des fonctions de hachages incorrectes.

Dans un autre exemple de procédé 210 illustré par la Figure 2B, qui comprend les blocs 201-204 de la Figure 2A, et qui peut fonctionner de concert avec le procédé illustré par la Figure 1B, la transmission, selon le bloc 105, du résultat d'appairage par le premier objet est suivie, selon le bloc 205, par la réception, par le second objet, du résultat d'appairage en vue d'une confirmation par un utilisateur. Cette confirmation de l'appairage par l'utilisateur de l'un des objets se produit selon le bloc 206. Dans certains cas, cette confirmation par un utilisateur du second objet se produit en effectuant une action sur le second objet. Dans d'autres cas cette confirmation par un utilisateur du premier objet se produit en effectuant une action sur le premier objet. Dans certains cas, cette confirmation par un utilisateur du premier ou du second objet se produit en effectuant une action sur un objet autre que le premier ou le second objet. Dans certains cas, la confirmation de l'appairage par l'utilisateur du premier ou du second objet se produit par inaction de l'utilisateur du premier ou du second objet pendant un certain intervalle de temps prédéfini. Dans certains cas dans lesquels cette confirmation par un utilisateur du premier ou du second objet se produit en effectuant une action sur le premier ou le second objet, cette action peut être de nature mécanique, par exemple en actionnant un bouton mécanique, de nature tactile, par exemple en actionnant un bouton d'une interface graphique, de nature sonore, par exemple par confirmation verbale perçue par un microphone du second objet, de nature visuelle, par exemple en déplaçant le regard dans une direction spécifique détectée par une caméra du second objet, de nature haptique, par exemple en secouant le second objet, le mouvement étant par exemple détecté par un accéléromètre du second objet.

Dans un autre exemple de procédé 120 illustré par la Figure 1C, qui comprend les blocs 101-104 de la Figure 1A, la première fonction de hachage étant une fonction de hachage avec clef, la réception, selon le bloc 104, de la fonction de hachage avec clef est suivie, selon le bloc 106, par la transmission, par le premier objet, sur le canal de communication principal de la clef de hachage de la première fonction de hachage.

Dans un autre exemple de procédé 220 illustré par la Figure 2C, qui comprend les blocs 201-204 de la Figure 2A, et qui peut fonctionner de concert avec le procédé illustré par la Figure 1C, la transmission, selon le bloc 106, de la clef de hachage de la première fonction de hachage est suivie par la réception, par le second objet, sur le canal de communication principal, selon le bloc 207, de cette clef de hachage de la première fonction de hachage, et par la transmission, par le second objet, sur le canal de communication principal, selon le bloc 208, du résultat d'appairage en vue d'une confirmation par un utilisateur du premier objet.

Il est à noter que la communication du résultat d'appairage et la confirmation peuvent se faire à partir du premier ou du second objet, selon les différents procédés proposés dans cet exposé.

La Figure 3 illustre un exemple 300 de premier ou de second objet selon cet exposé sous la forme d'un appareil. Cet appareil peut par exemple être un terminal portable permettant de communiquer par ondes radio avec un réseau de communication cellulaire. Ce terminal portable peut être un téléphone portable, smartphone, téléphone cellulaire, téléphone mobile ou une tablette connectée. Ce terminal portable peut permettre de communiquer par satellite. Ce terminal portable peut comprendre une carte à puce, éventuellement virtuelle, appelée carte SIM (Subscriber Identity Module). Cet appareil peut comprendre un contrôleur de l'appareil tel que le contrôleur 301 de l'appareil 300, le contrôleur de l'appareil étant configuré pour mettre en oeuvre un procédé selon cet exposé.

Dans certains cas, l'appareil comprend une mémoire de stockage informatique, ou support d'enregistrement lisible par microprocesseur, telle que, par exemple, la mémoire 302, la mémoire 302 comprenant des instructions 303 qui, lorsqu'elles sont exécutées par un microprocesseur, conduisent celui-ci à mettre en oeuvre le procédé selon le présent exposé.

Les procédés selon cet exposé peuvent être exécutés par un microprocesseur inclus dans un appareil tel qu'un système informatique, le système informatique comprenant un support d'enregistrement lisible par microprocesseur et comprenant des instructions qui, lorsqu'elles sont exécutées par le microprocesseur, conduisent celui-ci à mettre en oeuvre les procédés. Un tel système informatique peut être accessible par réseau. Un tel appareil peut être un compteur électrique ou un lecteur de compteur électrique.

Dans certains cas, l'appareil comprend un émetteur et un récepteur d'ondes radio, un capteur de lumière visible, une diode électroluminescente et une interface graphique à boutons. Ceci permet à l'appareil de pouvoir mettre en oeuvre le procédé selon cet exposé en tant que premier ou second objet, le canal de communication principal étant un canal radio utilisant l'émetteur et le récepteur d'ondes radio, et le canal hors bande étant un canal de type VLC utilisant le capteur de lumière visible et la diode électroluminescente, la confirmation d'appairage s'opérant par le biais d'un bouton de l'interface graphique.

Dans certains cas, l'appareil comprend un microphone et un haut-parleur permettant par exemple d'utiliser un canal hors bande audio ou de pratiquer des mesures contextuelles de type acoustique.

Dans certains cas, l'appareil peut comprendre l'un ou plusieurs des composants suivants, permettant l'utilisation de canaux hors bandes correspondants ou la mesure de grandeurs contextuelles correspondantes : émetteur, récepteur, vibreur, accéléromètre ou magnétomètre.

La figure 4 illustre un exemple spécifique de procédé d'appairage 400 selon cet exposé. Cet exemple illustre les communications ayant lieu entre un premier objet 401 et un second objet 402 en vue de leur appairage.

Cet exemple spécifique de procédé 400 selon cet exposé utilise le mécanisme de Diffie-Hellman pour échanger des clefs publiques $g^a$ et $g^b$, entre Alice (le premier objet 401) et Bob (le second objet 402), en utilisant des clefs privées éphémères $a$ et $b$. Chaque appareil ou objet 401 ou 402 génère également un nonce (un nombre aléatoire utilisé uniquement pour ce protocole et pour cette session) de $l$ bits afin de calculer des clefs publiques altérées $g^{a-r_u}$ et $g^{b-r_b}$. Un protocole contextuel utilisé dans la situation illustrée par la Figure 4 utilise une synchronisation entre les données collectées (données collectées correspondant à des mesures contextuelles) par chaque appareil 401 ou 402. Cette synchronisation est obtenue par le biais du paramètre $S_A$ qui est une séquence de mesures contextuelles d'Alice. Cet élément sert à indiquer à Bob le début de la partie valide des informations contextuelles à utiliser pour l'encodage utilisant le protocole contextuel.

Le procédé 400 est constitué des étapes suivantes.

Alice écoute l'environnement ambiant pour extraire les mesures contextuelles. Puis, elle envoie dans l'étape 411 son identifiant $ID_A$, un hash correspondant à la première fonction de hachage, dans ce cas si une fonction de hachage simple, $h(ID_A, ID_B, g^a, r_a)$ et un terme de synchronisation pour le protocole contextuel $S_A$ sur le canal principal. Ceci correspond par exemple au bloc 101 de la Figure 1A.

Bob utilise $S_A$ pour effectuer la synchronisation. Bob encode son nonce et une troncature de la clef publique altérée d'Alice en utilisant le protocole contextuel pour obtenir le code contextuel $V_b = E$

$$\left(r_b \| \left[g^{a-r_u}\right]_i^{i+l-1}\right)$$ où $i = r_b \, m \, (|g^{a-r_a}| - l)$ et $|g^{a-r_a}|$

représente le nombre de bit de $g^{a-r_a}$. Bob envoie ensuite dans l'étape 412 son identifiant, sa clef altérée et le code contextuel encodé sur le canal principal. Ceci correspond par exemple au bloc 202 de la Figure 2A.

Alice décode $V_b$ pour récupérer $r_b$ et vérifie le bon déroulement du protocole contextuel en évaluant le terme $\left[g^{a-r_u}\right]_i^{i+l-1}$. Puis, Alice calcule la bonne clef publique de Bob $g^b = g^{b-r_b} . g^{r_b}$ en utilisant le nonce $r_b$.

Ensuite, Alice envoie dans l'étape 413 le XOR

des paramètres $r_a$, $r_b$ et $\left[g^b\right]_j^{j+l-1}$ à Bob sur le canal hors bande. Ceci correspond par exemple au bloc 103 de la Figure 1A. Le paramètre $j = r_b \, m \, (|g^b| - l)$ représente le numéro du premier bit de la troncature.

Bob récupère le nonce $r_a$, calcule la clef publique d'Alice $g^a = g^{a-r_a} . g^{r_a}$, vérifie le hash envoyé dans l'étape 411 et notifie l'utilisateur du résultat. Ensuite, Bob envoie dans l'étape 414, correspondant au bloc 204, un hash à clef des paramètres $g^a$ et $g^b$ en utilisant la clef secrète de Diffie-Hellman $K = g^a$ .

Alice vérifie le hash à clef et notifie, dans l'étape 415 correspondant au bloc 105, l'utilisateur du résultat de l'appairage pour qu'il le confirme sur Bob tel que dans le bloc 206.

La figure 5 illustre un exemple spécifique de procédé d'appairage 500 selon cet exposé. Cet exemple illustre les communications ayant lieu entre un premier objet 501 et un second objet 502 en vue de leur appairage.

Cet exemple spécifique de procédé 500 selon cet exposé utilise le mécanisme de Diffie-Hellman pour échanger des clefs publiques $g^a$ et $g^b$, entre Alice (le premier objet 501) et Bob (le second objet 502), en utilisant des clefs privées éphémères $a$ et $b$. Chaque appareil ou objet 501 ou 502 génère également un nonce éphémère (un nombre aléatoire utilisé uniquement pour ce protocole et pour cette session) de $l$ bits afin de calculer des clefs publiques altérées $g^{a-r_a}$ et $g^{b-r_b}$ . Un protocole contextuel utilisé dans la situation illustrée par la Figure 5 utilise une synchronisation entre les données collectées (données collectées correspondant à des mesures contextuelles) par chaque appareil 501 ou 502. Cette synchronisation est obtenue par le biais du paramètre $S_A$ qui est une séquence de mesures contextuelles d'Alice. Cet élément sert à indiquer à Bob le début de la partie valide des informations contextuelles à utiliser pour l'encodage utilisant le protocole contextuel.

Le procédé 500 est constitué des étapes suivantes.

Alice écoute l'environnement ambiant pour extraire les mesures contextuelles. Puis, elle envoie dans l'étape 511 son identifiant $ID_A$, un hash correspondant à la première fonction de hachage, dans ce cas si une fonction de hachage avec clef, $h_{K_h}(ID_A, ID_B, g^a, r_a)$ et un terme de synchronisation pour le protocole contextuel $S_A$ sur le canal principal. Ceci correspond par exemple au bloc 101 de la Figure 1C.

Bob utilise $S_A$ pour effectuer la synchronisation. Bob encode son nonce et une troncature de la clef publique altérée d'Alice en utilisant le protocole contextuel pour obtenir le code contextuel $V_b = E$

$$\left( r_i \,||[g^{a-r_u}]_i^{i+l-1} \right)$$ où $i = r_b \, m \, (|g^{a-r_a}| - l)$ et $|g^{a-r_a}|$ représente le nombre de bit de $g^{a-r_a}$. Bob envoie ensuite dans l'étape 512 son identifiant, sa clef altérée et le code contextuel encodé sur le canal principal. Ceci correspond par exemple au bloc 202 de la Figure 2C.

Alice décode $V_b$ pour récupérer $r_b$ et vérifie le bon déroulement du protocole contextuel en évaluant le

terme $[g^{a-r_u}]_i^{i+l-1}$ . Puis, Alice calcule la bonne clef publique de Bob $g^b = g^{b-r_b}.g^{r_b}$ en utilisant le nonce $r_b$.

Ensuite, Alice envoie dans l'étape 513 le XOR

des paramètres $r_a$, $r_b$ et $[g^b]_j^{j+l-1}$ à Bob sur le canal hors bande. Ceci correspond par exemple au bloc 103 de la Figure 1C. Le paramètre $j = r_b \, m \, (|g^b| - l)$ représente le numéro du premier bit de la troncature.

Bob récupère le nonce $r_a$ et calcule la clef publique d'Alice $g^a = g^{a-r_a} .g_{r_a}$. Ensuite, Bob envoie dans l'étape 514, correspondant au bloc 204, un hash à clef des paramètres $g^a$ et $g^b$ en utilisant la clef secrète de Diffie-Hellman $K = g^a$.

Alice vérifie le hash à clef envoyé par Bob selon le bloc 514 et envoie, selon le bloc 515, la clef de la première fonction de hachage.

Bob reçoit la clef de la première fonction de hachage, vérifie le hash correspondant envoyé dans l'étape 511 et notifie l'utilisateur du résultat de l'appairage selon le bloc 56 pour que l'utilisateur le confirme sur Alice.

Les notations suivantes ont été utilisées :

$mod$ : Opération modulo
$IDx$ . Identifiant de X, par exemple Adresse MAC
$A\|B$ : Concaténation des termes A et B
$\oplus$ : OR exclusif
$Encode$(.) : Schéma d'encodage contextuel
$Decode$(.): Schéma de décodage contextuel
$h$(.) : Fonction de hachage
$h_K$ (.) : Fonction de hachage avec une clef $K$
$|X|$ : Nombre de bits de $X$
$[X]^{i+l-l}$ : Troncature à $l$ -bit de X à partir du bit numéro $i$
. : Opérateur de multiplication

Le procédé selon cet exposé peut réduire un temps d'appairage en utilisant le canal de communication principal pour la plupart des échanges. Ce procédé peut également limiter les interventions d'un utilisateur. Ce procédé peut également se limiter à cinq ou six échanges et au calcul de deux fonctions de hachage. Ce procédé peut également s'adapter au différents types d'objets utilisés.

Le procédé selon cet exposé peut être précédé d'une étape de découverte durant laquelle le premier et le second objet découvrent les objets dans leur proximité et échangent des informations concernant par exemple des fonctions cryptographiques et des paramètres de sécurité tels qu'un groupe de Diffie-Hellman (par exemple un groupe cyclique fini ou une courbe elliptique utilisée pour générer les clefs privées), le générateur $g$, ou le nombre de bits $l$ à échanger sur le canal hors bande.

Un exemple de protocole contextuel utilisé est le protocole TDS « The Dancing Signals ». Selon le protocole TDS, le premier et le second objet sont placés à moins de 5cm l'un de l'autre. Le premier et le second objet écoutent une source WiFi publique et obtiennent des échantillonnages fortement corrélés. Un échantillonnage suffisant permet une synchronisation du premier et du second objet. Un nombre d'échantillonnage suffisant permet également la génération d'une table de substitution (S-Box) pour chiffrement symétrique, la S-Box du premier objet étant similaire à la S-Box du second objet, permettant donc la communication entre le premier et le second objet en utilisant ces tables de substitutions similaires basées sur un échantillonnage d'une même source radio publique, par exemple une source WiFi.

## Revendications

1. Procédé destiné à l'appairage entre un premier objet et un second objet, le premier et le second objet étant des objets connectés partageant un même contexte, le procédé comprenant :

a. la transmission (101), par le premier objet, sur un canal de communication principal, d'un identifiant du premier objet, d'une clef publique altérée du premier objet, d'une première fonction de hachage et d'un terme de synchronisation contextuel d'un protocole contextuel, la clef publique altérée du premier objet étant générée à partir d'un nonce éphémère du premier objet et d'une clef privée éphémère du premier objet, la première fonction de hachage étant une fonction d'une clef publique du premier objet et du nonce éphémère du premier objet, la clef publique du premier objet étant générée à partir de la clef privée éphémère du premier objet;
b. la réception (102), par le premier objet, sur le canal de communication principal, d'un identifiant du second objet, d'une clef publique altérée du second objet et d'un code contextuel, la clef publique altérée du second objet étant générée à partir d'une clef privée éphémère du second objet et d'un nonce éphémère du second objet, le code contextuel étant encodé à partir du protocole contextuel et étant une fonction du nonce éphémère du second objet et de la clef publique altérée du premier objet ;
c. le décodage, par le premier objet, du code contextuel, dû au fait que le premier et le second objet partagent le même contexte ;
d. la déduction, par le premier objet, d'une valeur du nonce éphémère du second objet à partir du code contextuel encodé par le second objet utilisant le protocole contextuel ;
e. la transmission (103), par le premier objet, sur un canal hors bande, d'une chaîne courte d'authentification, la chaine courte d'authentification étant fonction du nonce éphémère du premier objet, du nonce éphémère du second objet, et d'une troncature d'une clef publique du second objet; et
f. la réception (104), par le premier objet, sur le canal de communication principal, d'une fonction de hachage avec clef, la fonction de hachage avec clef étant une fonction de l'identifiant du premier objet, de l'identifiant du second objet, de la clef publique du premier objet et de la clef publique du second objet.

2. Procédé destiné à l'appairage entre un premier objet et un second objet, le premier et le second objet étant des objets connectés partageant un même contexte, le procédé comprenant :

a. la réception (201), par le second objet, sur un canal de communication principal, d'une clef publique altérée du premier objet, d'une première fonction de hachage et d'un terme de synchronisation contextuel d'un protocole contextuel permettant au second objet de se synchroniser précisément avec le premier objet dans le cadre du protocole contextuel, la clef publique altérée du premier objet étant générée à partir d'un nonce éphémère du premier objet et d'une clef privée éphémère du premier objet, la première fonction de hachage étant une fonction d'une clef publique du premier objet et du nonce éphémère du premier objet, la clef publique du premier objet étant générée à partir de la clef privée éphémère du premier objet;
b. la transmission (202), par le second objet, sur le canal de communication principal, d'un identifiant du second objet, d'une clef publique altérée du second objet et d'un code contextuel, la clef publique altérée du second objet étant générée à partir d'une clef privée éphémère du second objet et d'un nonce éphémère du second objet, le code contextuel étant encodé à partir du protocole contextuel et étant une fonction du nonce éphémère du second objet et de la clef publique altérée du premier objet ;
c. la réception (203), par le second objet, sur un canal hors bande, d'une chaîne courte d'authentification, la chaine courte d'authentification étant fonction du nonce éphémère du premier objet, du nonce éphémère du second objet, et d'une troncature d'une clef publique du second objet; et
d. la transmission (204), par le second objet, sur le canal de communication principal, d'une fonction de hachage avec clef.

3. Le procédé selon l'une quelconque des revendications précédentes, le procédé comprenant la confirmation (206) de l'appairage par un utilisateur, la confirmation se produisant en effectuant une action sur l'un du premier ou second objet.

4. Le procédé selon l'une quelconque des revendications précédentes, le canal de communication principal étant un canal par ondes radio.

5. Le procédé selon l'une quelconque des revendications précédentes, le canal hors bande étant un canal de communication par lumière visible, un canal de communication haptique, un canal de communication acoustique ou un canal de communication radio.

6. Le procédé selon l'une quelconque des revendications précédentes, la chaine courte d'authentification étant un OR exclusif du nonce éphémère du premier objet, du nonce éphémère du second objet, et de la troncature de la clef publique du second objet.

7. Le procédé selon l'une quelconque des revendications précédentes, le terme de synchronisation contextuel correspondant à une séquence de mesures contextuelles du premier objet.

8. Le procédé selon l'une quelconque des revendications précédentes, le contexte étant un contexte radio.

9. Le procédé selon l'une quelconque des revendications précédentes, le contexte étant un contexte acoustique.

10. Le procédé selon l'une quelconque des revendications précédentes, le contexte étant un contexte magnétique.

11. Le procédé selon l'une quelconque des revendications précédentes, le premier et le second objet se trouvant à moins de 10 mètres l'un de l'autre.

12. Le procédé selon l'une quelconque des revendications précédentes, les identifiants du premier et du second objet correspondant à leurs adresses de contrôle d'accès au support, MAC, respectives, à un identifiant numérique unique, ou à un identifiant de type Bluetooth.

13. Support d'enregistrement (302) lisible par microprocesseur comprenant des instructions (303) qui, lorsqu'elles sont exécutées par un microprocesseur, conduisent celui-ci à mettre en oeuvre le procédé selon l'une quelconque des revendications 1 à 12.

14. Appareil (300) comprenant un contrôleur (301) de l'appareil configuré pour mettre en oeuvre un procédé selon l'une quelconque des revendications 1 à 12.

15. L'appareil selon la revendication 14, l'appareil comprenant un émetteur et un récepteur d'ondes radio, un capteur de lumière visible, une diode électroluminescente et une interface graphique à boutons.

16. L'appareil selon l'une quelconque des revendications 14 ou 15, l'appareil comprenant un microphone et un haut-parleur.

## Patentansprüche

1. Verfahren zum Pairing zwischen einem ersten Objekt und einem zweiten Objekt, wobei das erste und das zweite Objekt verbundene Objekte sind, die einen gemeinsamen Kontext teilen, wobei das Verfahren Folgendes umfasst:

   a. Übertragung (101) einer Kennung des ersten Objekts, eines veränderten öffentlichen Schlüssels des ersten Objekts, einer ersten Hashfunktion und eines kontextbezogenen Synchronisationsterms eines Kontextprotokolls durch das erste Objekt über einen Hauptkommunikationskanal, wobei der veränderte öffentliche Schlüssel des ersten Objekts aus einer ephemeren Nonce des ersten Objekts und einem ephemeren privaten Schlüssel des ersten Objekts erzeugt, wobei die erste Hashfunktion eine Funktion eines öffentlichen Schlüssels des ersten Objekts und der ephemeren Nonce des ersten Objekts ist, und der öffentliche Schlüssel des ersten Objekts aus dem ephemeren privaten Schlüssel des ersten Objekts erzeugt wird;
   b. Empfang (102) über den Hauptkommunikationskanal durch das erste Objekt einer Kennung des zweiten Objekts, eines veränderten öffentlichen Schlüssels des zweiten Objekts und eines Kontextcode, wobei der veränderte öffentliche Schlüssel des zweiten Objekts aus einem ephemeren privaten Schlüssel des zweiten Objekts und einer ephemeren Nonce des zweiten Objekts generiert wird, wobei der Kontextcode aus dem Kontextprotokoll codiert wird und eine Funktion der ephemeren Nonce des zweiten Objekts und des veränderten öffentlichen Schlüssels des ersten Objekts ist;
   c. Decodierung des Kontextcodes durch das erste Objekt aufgrund der Tatsache, dass das erste und das zweite Objekt denselben Kontext teilen;
   d. Ableitung eines Wertes der ephemeren Nonce des zweiten Objekts durch das erste Objekt aus dem Kontextcode, der durch das zweite Objekt unter Verwendung des Kontextprotokolls kodiert wurde;
   e. Übertragung (103) einer Authentifizierungs-Kurzkette durch das erste Objekt über einen Out-of-Band-Kanal, wobei die Authentifizierungs-Kurzkette eine Funktion der ephemeren Nonce des ersten Objekts, der ephemeren Nonce des zweiten Objekts und einer Trunkierung eines öffentlichen Schlüssels des zweiten Objekts ist; und
   f. Empfang (104) einer schlüsselbasierten Hashfunktion durch das erste Objekt über den Hauptkommunikationskanal, wobei die schlüsselbasierte Hashfunktion eine Funktion der Kennung des ersten Objekts, der Kennung des zweiten Objekts, des öffentlichen Schlüssels des ersten Objekts und des öffentlichen Schlüssels des zweiten Objekts ist.

2. Verfahren zum Pairing zwischen einem ersten Objekt und einem zweiten Objekt, wobei das erste und das zweite Objekt verbundene Objekte sind, die einen gemeinsamen Kontext teilen, wobei das Verfahren Folgendes umfasst:

   a. Empfang (201) über einen Hauptkommunikationskanal durch das zweite Objekt eines veränderten öffentlichen Schlüssels des ersten Objekts, einer ersten Hashfunktion und eines kontextbezogenen Synchronisationsterms eines Kontextprotokolls, der es dem zweiten Objekt ermöglicht, sich im Rahmen des Kontextprotokolls genau mit dem ersten Objekt zu synchronisieren, wobei der veränderte öffentliche Schlüssel des ersten Objekts aus einer ephemeren Nonce des ersten Objekts und einem ephemeren privaten Schlüssel des ersten Objekts erzeugt wird, wobei die erste Hashfunktion eine Funktion eines öffentlichen Schlüssels des ersten Objekts und der ephemeren Nonce des ersten Objekts ist, und wobei der öffentliche Schlüssel des ersten Objekts aus dem ephemeren privaten Schlüssel des ersten Objekts erzeugt wird;
   b. Übertragung (202) über den Hauptkommunikationskanal durch das zweite Objekt einer Kennung des zweiten Objekts, eines veränderten öffentlichen Schlüssels des zweiten Objekts und eines Kontextcodes, wobei der veränderte öffentliche Schlüssel des zweiten Objekts aus einem ephemeren privaten Schlüssel des zweiten Objekts und einer ephemeren Nonce des zweiten Objekts generiert wird, wobei der Kontextcode aus dem Kontextprotokoll codiert wird und eine Funktion der ephemeren Nonce des zweiten Objekts und des veränderten öffentlichen Schlüssels des ersten Objekts ist;
   c. Empfangen (203) einer Authentifizierungs-Kurzkette durch das zweite Objekt über einen Out-of-Band-Kanal, wobei die Authentifizierungs-Kurzkette eine Funktion der ephemeren Nonce des ersten Objekts, der ephemeren Nonce des zweiten Objekts und einer Trunkierung eines öffentlichen Schlüssels des zweiten Objekts ist; und
   d. Übertragen (204) einer Hashfunktion mit Schlüssel durch das zweite Objekt über den Hauptkommunikationskanal.

3. Verfahren nach einem der vorhergehenden Ansprüche, wobei das Verfahren die Bestätigung (206) des Pairings durch einen Benutzer umfasst, wobei die Bestätigung durch Ausführen einer Aktion an einem aus erstem und zweiten Objekt erfolgt.

4. Verfahren nach einem der vorhergehenden Ansprüche, wobei der Hauptkommunikationskanal ein Funkwellenkanal ist.

5. Verfahren nach einem der vorhergehenden Ansprüche, wobei der Out-of-Band-Kanal ein Kommunikationskanal für sichtbares Licht, ein haptischer Kommunikationskanal, ein akustischer Kommunikationskanal oder ein Funkkommunikationskanal ist.

6. Verfahren nach einem der vorhergehenden Ansprüche, wobei die kurze Authentifizierungskette ein exklusives OR der ephemeren Nonce des ersten Objekts, der ephemeren Nonce des zweiten Objekts und der Trunkierung des öffentlichen Schlüssels des zweiten Objekts ist.

7. Verfahren nach einem der vorhergehenden Ansprüche, wobei der kontextbezogene Synchronisationsterm einer Sequenz von Kontextmaßnahmen des ersten Objekts entspricht.

8. Verfahren nach einem der vorhergehenden Ansprüche, wobei der Kontext ein Funkkontext ist.

9. Verfahren nach einem der vorhergehenden Ansprüche, wobei der Kontext ein akustischer Kontext ist.

10. Verfahren nach einem der vorhergehenden Ansprüche, wobei der Kontext ein magnetischer Kontext ist.

11. Verfahren nach einem der vorhergehenden Ansprüche, wobei das erste und das zweite Objekt weniger als 10 Meter voneinander entfernt sind.

12. Verfahren nach einem der vorhergehenden Ansprüche, wobei die Kennungen des ersten und des zweiten Objekts ihren jeweiligen MAC-Adressen, einer eindeutigen numerischen Kennung oder einer Bluetooth-Kennung entsprechen.

13. Mikroprozessor-lesbares Aufzeichnungsmedium (302), welches Anweisungen (303) umfasst, die, wenn sie von einem Mikroprozessor ausgeführt werden, diesen dazu veranlassen, das Verfahren nach einem der Ansprüche 1 bis 12 auszuführen.

14. Vorrichtung (300) mit einem Vorrichtungscontroller (301), der dazu konfiguriert ist, ein Verfahren nach einem der Ansprüche 1 bis 12 durchzuführen.

15. Vorrichtung nach Anspruch 14, wobei die Vorrichtung einen Sender und einen Empfänger für Funkwellen, einen Sensor für sichtbares Licht, eine elektrolumineszente Diode und eine grafische Benutzeroberfläche mit Schaltflächen umfasst.

16. Vorrichtung nach einem der Ansprüche 14 oder 15, wobei die Vorrichtung ein Mikrofon und einen Lautsprecher umfasst.

**Claims**

1. A method intended for pairing between a first object and a second object, the first and the second object being connected objects sharing the same context, the method comprising:

   a. transmitting (101), by the first object, over a main communication channel, an identifier of the first object, an altered public key of the first object, a first hash function and a contextual synchronisation term of a contextual protocol, the altered public key of the first object being generated from an ephemeral nonce of the first object and an ephemeral private key of the first object, the first hash function being a function of a public key of the first object and the ephemeral nonce of the first object, the public key of the first object being generated from the ephemeral private key of the first object;
   b. receiving (102), by the first object, over the main communication channel, an identifier of the second object, an altered public key of the second object and a contextual code, the altered public key of the second object being generated from an ephemeral private key of the second object and an ephemeral nonce of the second object, the contextual code being encoded from the contextual protocol and being a function of the ephemeral nonce of the second object and the altered public key of the first object;
   c. decoding, by the first object, the contextual code, due to the fact that the first and the second object share the same context;
   d. deducing, by the first object, a value of the ephemeral nonce of the second object from the contextual code encoded by the second object using the contextual protocol;
   e. transmitting (103), by the first object, over an out-of-band channel, a short authentication string, the short authentication string being a function of the ephemeral nonce of the first object, the ephemeral nonce of the second object, and a truncation of a public key of the second object; and
   f. receiving (104), by the first object, on the main communication channel, a hash function with key, the hash function with key being a function of the identifier of the first object, the identifier of the second object, the public key of the first object and the public key of the second object.

2. The method intended for pairing between a first object and a second object, the first and the second object being connected objects sharing the same context, the method comprising:

   a. receiving (201), by the second object, over a main communication channel, an altered public key of the first object, a first hash function and a contextual synchronisation term of a contextual protocol allowing the second object to precisely synchronise with the first object within the framework of the contextual protocol, the altered public key of the first object being generated from an ephemeral nonce of the first object and an ephemeral private key of the first object, the first hash function being a function of a public key of the first object and the ephemeral nonce of the first object, the public key of the first object being generated from the ephemeral private key of the first object;
   b. transmitting (202), by the second object, on the main communication channel, an identifier of the second object, an altered public key of the second object and a contextual code, the altered public key of the second object being generated from an ephemeral private key of the second object and an ephemeral nonce of the second object, the contextual code being encoded from the contextual protocol and being a function of the ephemeral nonce of the second object and of the altered public key of the first object;
   c. receiving (203), by the second object, over an out-of-band channel, a short authentication string, the short authentication string being a function of the ephemeral nonce of the first object, the ephemeral nonce of the second object, and a truncation of a public key of the second object; and
   d. transmitting (204), by the second object, over the main communication channel, a hash function with key.

3. The method according to any one of the preceding claims, the method comprising the confirmation (206) of the pairing by a user, the confirmation occurring by performing an action on one of the first or second object.

4. The method according to any one of the preceding claims, the primary communication channel being a radio wave channel.

5. The method according to any one of the preceding claims, the out-of-band channel being a visible light communication channel, a haptic communication channel, an acoustic communication channel or a radio communication channel.

6.  The method according to any one of the preceding claims, the short authentication string being an exclusive OR of the ephemeral nonce of the first object, of the ephemeral nonce of the second object, and of the truncation of the public key of the second object.

7.  The method according to any one of the preceding claims, the contextual synchronisation term corresponding to a sequence of contextual measurements of the first object.

8.  The method according to any one of the preceding claims, the context being a radio context.

9.  The method according to any one of the preceding claims, the context being an acoustic context.

10. The method according to any one of the preceding claims, the context being a magnetic context.

11. The method according to any one of the preceding claims, the first and the second object being within 10 meters of each other.

12. The method according to any one of the preceding claims, the identifiers of the first and of the second object corresponding to their respective medium access control addresses, MAC, to a unique digital identifier, or to an identifier of the Bluetooth type.

13. A microprocessor-readable recording medium (302) comprising instructions (303) which, when they are executed by a microprocessor, cause the latter to implement the method according to any one of claims 1 to 12.

14. An apparatus (300) comprising a controller (301) of the apparatus configured to implement a method according to any one of claims 1 to 12.

15. The apparatus according to claim 14, the apparatus comprising a radio wave emitter and receiver, a visible light sensor, a light emitting diode and a graphical button interface.

16. The apparatus according to any one of claims 14 or 15, the apparatus comprising a microphone and a loudspeaker.

100

```
┌─────────────────────┐
│        101          │
└─────────────────────┘
          │
┌─────────────────────┐
│        102          │
└─────────────────────┘
          │
┌─────────────────────┐
│        103          │
└─────────────────────┘
          │
┌─────────────────────┐
│        104          │
└─────────────────────┘
```

Fig. 1A

200

```
┌─────────────────────┐
│        201          │
└─────────────────────┘
          │
┌─────────────────────┐
│        202          │
└─────────────────────┘
          │
┌─────────────────────┐
│        203          │
└─────────────────────┘
          │
┌─────────────────────┐
│        204          │
└─────────────────────┘
```

Fig. 2A

110

```
┌─────────────────────┐
│         101         │
└─────────────────────┘
           │
┌─────────────────────┐
│         102         │
└─────────────────────┘
           │
┌─────────────────────┐
│         103         │
└─────────────────────┘
           │
┌─────────────────────┐
│         104         │
└─────────────────────┘
           │
┌─────────────────────┐
│         105         │
└─────────────────────┘
```

Fig. 1B

210

```
┌─────────────────────┐
│         201         │
└─────────────────────┘
           │
┌─────────────────────┐
│         202         │
└─────────────────────┘
           │
┌─────────────────────┐
│         203         │
└─────────────────────┘
           │
┌─────────────────────┐
│         204         │
└─────────────────────┘
           │
┌─────────────────────┐
│         205         │
└─────────────────────┘
           │
┌─────────────────────┐
│         206         │
└─────────────────────┘
```

Fig. 2B

120

```
┌─────────────┐
│     101     │
└─────────────┘
┌─────────────┐
│     102     │
└─────────────┘
┌─────────────┐
│     103     │
└─────────────┘
┌─────────────┐
│     104     │
└─────────────┘
┌─────────────┐
│     106     │
└─────────────┘
```

Fig. 1C

220

```
┌─────────────┐
│     201     │
└─────────────┘
┌─────────────┐
│     202     │
└─────────────┘
┌─────────────┐
│     203     │
└─────────────┘
┌─────────────┐
│     204     │
└─────────────┘
┌─────────────┐
│     207     │
└─────────────┘
┌─────────────┐
│     208     │
└─────────────┘
```

Fig. 2C

300 ⟶

301

302

303

Fig. 3

400

401

402

411

412

413

414

415

Fig. 4

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7424615 B

**Littérature non-brevet citée dans la description**

- Instant and Robust Authentication and Key Agreement among Mobile Devices. **WEI XI et al.** COMPUTER AND COMMUNICATIONS SECURITY. ACM, 24 Octobre 2016, 616-627

- **MIKHAIL FOMICHEV et al.** Survey and Systematization of Secure Device Pairing. CORNELL UNIVERSITY LIBRARY, 08 Septembre 2017